# EUROPÄISCHE PATENTSCHRIFT

(11) **EP 1 058 120 B1**
(45) Veröffentlichungstag und Bekanntmachung des Hinweises auf die Patenterteilung: **07.12.2016**
(21) Anmeldenummer: 00109890.4
(22) Anmeldetag: 10.05.2000
(51) Int. Cl.: G01P 13/04, H02K 11/33, H02K 11/21, G01P 3/481

(54) **Verfahren und Vorrichtung zur Drehzahl- und/oder Drehrichtungserfassung von Motoren**
Device and method for evaluating the rotational speed and/or direction of motors
Dispositif et méthode pour l'évaluation de la vitesse et/ou du sens de rotation de moteurs

(30) Priorität: 27.05.1999 DE 19924201
(43) Veröffentlichungstag der Anmeldung: 06.12.2000
(73) Patentinhaber: SEW-EURODRIVE GmbH & Co. KG, 76646 Bruchsal (DE)
(72) Erfinder: Harnischmacher, Michael, 58708 Menden (DE); Dietz, Gregor, 76646 Bruchsal (DE)

(56) Entgegenhaltungen:
- EP-A- 0 791 874
- WO-A-96/18236
- DE-A- 4 408 488
- DE-A- 19 634 692
- PATENT ABSTRACTS OF JAPAN vol. 1997, no. 01, 31. Januar 1997 (1997-01-31) & JP 08 247440 A (SANYO ELECTRIC CO LTD), 27. September 1996 (1996-09-27)

## Beschreibung

Die Erfindung betrifft ein Verfahren und eine Vorrichtung zur Drehzahl- und/oder Drehrichtungserfassung von Motoren.
Aus der DE 196 34 692 ist eine Vorrichtung zur Drehzahl- und/oder Drehrichtungserfassung von Motoren bekannt, die mit dem Lüfter rotierbare Geberfahnen aufweist. Die Signale des dort beschriebenen Impulsgebers werden einer speicherprogrammierbaren Steuerung, also einer SPS, zugeführt. Diese wertet die Signale des Impulsgebers aus und kann eine Drehzahl daraus bestimmen und anzeigen. Außerdem sind damit von den Drehzahlwerten abhängige Ansteuerungen des Motors ausführbar, wie beispielsweise elektrisches Abschalten des Motors.
Da der Impulsgeber je nach Anzahl der Geberfahnen mehrere oder viele Impulse pro Umdrehung abgibt, muss die SPS eine schnelle Signalverarbeitung aufweisen. Ein weiterer Nachteil ist, dass die Verdrahtung für die Signalübertragung vom Impulsgeber zur SPS sternförmig verläuft und daher einen großen kostspieligen Verdrahtungsaufwand erforderlich macht. Auch wenn einige Motoren mit der beschriebenen Drehzahl- und/oder Drehrichtungserfassung ausgestattet sind, muss jeder Impulsgeber einzeln mit der SPS verbunden werden.

Des weiteren sind in der Anlagentechnik Bussysteme, wie Feldbus oder dergleichen, bekannt, z.B. aus der DE 44 08 488. Als
Feldbus-Systeme sind verschiedenen Systeme, wie Interbus, Profibus, CAN-Bus oder dergleichen und auch ASI-Bus, bekannt. Ein industrieüblicher ASI-Bus ist äußerst kostengünstig. Es ist ein ASI-Bus bekannt, der im Wesentlichen nur eine Zweidrahtleitung benötigt, eine beliebige Verdrahtungs-Topologie erlaubt und nur mit einer Übertragungsrate oder -frequenz von beispielsweise etwa 176 kHz betrieben wird. Dabei sind bis zu 32 Busteilnehmer anschließbar, die alle 5ms abgefragt werden. Insbesondere ist auch ein Zentralrechner, wie zentrale Steuerung, speicherprogrammierbare Steuerung SPS oder dergleichen, als Busteilnehmer anschließbar.
In der Anlagentechnik treten vermehrt dezentrale Steuerungen auf, die weniger leistungsfähig als zentrale Steuerungen, aber dafür sehr kostengünstig sind. Außerdem wird der Verkabelungs-Aufwand durch den Einsatz dezentraler Systeme sehr stark verringert. Problematisch ist bei solchen leistungsschwachen Systemen, dass sie nur eine geringe Datenübertragungsrate aufweisen. Ein beispielhafter ASI-Bus frägt, wie oben erwähnt, nur alle 5ms die Busteilnehmer ab. Ein Motor mit Impulsgeber nach dem Stand der Technik mit 6 Geberfahnen und einer Umdrehungszahl von 3000 pro Minute würde also den beschriebenen beispielhaften ASI-Bus überlasten. Eine beispielhaft in den Figuren der DE 196 34 692 aufgezeigte Vorrichtung kann daher in einem solchen Bus-System nicht eingesetzt werden.
Der Erfindung liegt die Aufgabe zugrunde, ein Verfahren und eine Vorrichtung zur Drehzahl- und/oder Drehrichtungserfassung von Motoren weiterzubilden unter Vermeidung der vorgenannten Nachteile. Insbesondere soll eine einfache, übersichtliche und kostengünstige Verkabelungsstruktur und der Einsatz von kostengünstigen Feldbussystemen mit niedriger Datenübertragungsrate ermöglicht werden.
Erfindungsgemäß wird die Aufgabe bei einem Verfahren zur Drehzahl- und/oder Drehrichtungserfassung von Motoren gelöst nach den in Anspruch 1 angegebenen Merkmalen und bei einer Vorrichtung zur Drehzahl- und/oder Drehrichtungserfassung von Motoren nach Anspruch 7.

Wesentliche Merkmale der Erfindung sind, dass bei einem Verfahren Impulse, insbesondere elektrische Signale, des Impulsgebers verarbeitbar sind, in ein Busprotokoll umsetzbar sind und die so erhaltene Information, oder die so erhaltenen Daten mittels eines Bussystems an mindestens einen weiteren Busteilnehmer, insbesondere einen Zentralrechner oder eine SPS, elektrisch und/oder optisch übertragbar sind, und dass die Impulsrate derart niedrig ist, dass die maximal mögliche Datenübertragungsrate des Bussystems nach Umsetzung in das Busprotokoll nicht überschritten wird.

Der Impulsgeber liefert beim Vorbeidrehen der Geberfahnen elektrische Impulse oder Signale mit einer Impulsrate, also Impulse pro Zeiteinheit. Die Impulse werden danach mittels Software oder Hardware aufbereitet, verarbeitet und dann in ein Busprotokoll umgesetzt, damit ein Übertragen mittels Bussystem ermöglicht wird. Dabei wird aus der Information keines oder eines Impulses ein Datenwort gebildet, das eine Länge von mehreren Bit aufweist. Die genaue Länge ist abhängig vom verwendeten Bussystem. Da jeder Impuls auch abgefragt werden soll, ergibt sich schon bei Verwendung nur eines einzigen Impulsgebers mit zugehöriger elektronischer Schaltung eine notwendige hohe Datenübertragungsrate. Diese Datenübertragungsrate überschreitet erfindungsgemäß und vorteilhaft keinen kritischen maximalen Wert.

Von Vorteil ist dabei, dass eine einfache, übersichtliche und kostengünstige Verkabelungsstruktur, insbesondere im Vergleich zu einer sternförmigen Verkabelungsstruktur, verwendbar ist, der Einsatz von Bussystemen mit niedriger Datenübertragungsrate ermöglicht wird und die Impulsrate keinen kritischen Wert überschreitet und daher eine korrekte Übertragung in kostengünstiger Weise erfolgt. Insbesondere sind äußerst kostengünstige und einfache Bussysteme einsetzbar, die nur eine niedrige Datenübertragungsrate aufweisen.

Bei einer vorteilhaften Ausgestaltung wird die Impulsrate vor der Umsetzung in ein Busprotokoll derart reduziert oder herabgeteilt, dass die Impulsrate niedriger als die maximal mögliche Datenübertragungsrate des Bussystems ist. Das Reduzieren oder Herabteilen kann dabei mittels elektronischer Hardware, Software oder mechanisch erfolgen. Von Vorteil ist dabei, dass bei der Umsetzung der Daten ins Busprotokoll nur niedrige Impulsraten umgesetzt werden müssen, also wenige Impulse pro Zeiteinheit.

Bei einer vorteilhaften Ausgestaltung ist die Anzahl der Geberfahnen bei der Fertigung oder während des Betriebs derart gewählt oder wählbar, dass die Impulsrate niedriger als die maximal mögliche Datenübertragungsrate des Bussystems ist. Bei der Fertigung kann also beispielsweise nur eine Geberfahne vorgesehen werden. Beim Betrieb kann beispielsweise durch mechanisches Verschieben oder Bewegen oder auch durch Änderung des Detektionsverfahrens, wie Änderung der Schwelle der Empfindlichkeit oder dergleichen, die Anzahl der aktiven, zusammenwirkenden Geberfahnen verändert werden, insbesondere verringert werden. Von Vorteil ist dabei, dass wiederum die Impulsrate gering ist oder verringerbar ist.

Bei einer vorteilhaften Ausgestaltung ist als Bussystem ein ASI-Bus verwendbar. Von Vorteil ist dabei, dass ein besonders einfaches Bussystem verwendbar ist und der Aufwand für Verdrahtung äußerst gering ist.

Bei einer vorteilhaften Ausgestaltung ist als Bussystem ein Feldbus, wie Interbus, Profibus, CAN oder dergleichen, verwendbar. Von Vorteil ist dabei, dass industrieübliche Standardsysteme verwendbar sind, die daher auch kostengünstig verfügbar sind.

Bei einer vorteilhaften Ausgestaltung rotieren pro Umdrehung des Lüfters eine Geberfahne oder zwei Geberfahnen am Impulsgeber vorbei und wirken mit dem Impulsgeber derart zusammen, dass eine entsprechend geringe Zahl von Impulsen entsteht. Von Vorteil ist dabei, dass eine niedrige Impulsrate entsteht. Insbesondere im Fall einer wirksamen Geberfahne pro Umdrehung ist die niedrigste Rate verwirklicht bei einfachster Ausführung. Weitere Reduzierung der Rate ließe sich nur durch zusätzlichen mechanischen oder elektronischen Aufwand erzeugen.

Wesentliche Merkmale der Erfindung sind, dass bei einer Vorrichtung zur Drehzahl- und/oder Drehrichtungserfassung von Motoren der mindestens eine Impulsgeber elektrisch mit zumindest einer elektronischen Schaltung verbunden ist und diese elektronische Schaltung mit einem Bussystem, insbesondere Feldbus, ASI oder dergleichen, elektrisch und/oder optisch als Busteilnehmer verbindbar ist, wobei das Bussystem mindestens einen weiteren Busteilnehmer, insbesondere einen Zentralrechner oder eine SPS, umfasst, und dass der Lüfter, die Geberfahnen und die elektronische Schaltung derart ausgebildet ist, dass zur Verringerung der Impulsrate die maximal mögliche Datenübertragungsrate des Bussystems nach Umsetzung in das Busprotokoll nicht überschritten wird:

Von Vorteil ist dabei, dass bei Einsatz einer einfachen, übersichtlichen und kostengünstigen Verkabelungsstruktur, insbesondere im Vergleich zu einer sternförmigen Verkabelungsstruktur, der Einsatz von Bussystemen mit niedriger Datenübertragungsrate ermöglicht wird und die Impulsrate keinen kritischen Wert überschreitet und daher eine korrekte Übertragung in kostengünstiger Weise erfolgt. Insbesondere sind äußerst kostengünstige und einfache Bussysteme einsetzbar, die nur eine niedrige Datenübertragungsrate aufweisen.

Bei weiteren erfindungsgemäßen Vorrichtungen zur Drehzahl- und/oder Drehrichtungserfassung von Motoren werden die Impulsgeber, Bussysteme, Geberfahnen oder elektronische Schaltungen derart gestaltet, dass Verfahren der oben beschriebenen Art und Weise einsetzbar sind. Die dabei entstehenden Vorteile umfassen die jeweils oben schon genannten.

Bei einer weiteren vorteilhaften Ausgestaltung ist zumindest ein Impulsgeber außenseitig der Lüfterhaube montierbar. Von Vorteil ist dabei, dass er bei Reparatur, Montage oder Fertigung in einfacher Weise demontierbar ist.

Bei einer vorteilhaften Ausgestaltung ist mindestens ein Impulsgeber am Motor montierbar. Von Vorteil ist dabei, dass dem Impulsgeber eine mechanisch stabile Grundlage zur Verfügung steht.

Bei einer vorteilhaften Ausgestaltung weist der Impulsgeber einen Schwingkreis auf. Von Vorteil ist dabei, dass industrieübliche Impulsgeber, wie Näherungsgeber oder dergleichen, verwendbar sind. Diese weisen einen Schwingkreis auf, dessen Resonanzfrequenz wesentlich abhängt von der Entfernung der Geberfahne, die oft eine Induktivität einer Spule verändert. Es sind auch Systeme verfügbar, die elektrisch oder magnetisch leitfähige Objekte detektieren.

Bei einer vorteilhaften Ausgestaltung weist eine mit dem Lüfter rotierbare Scheibe oder der Lüfter selbst die Geberfahnen auf. Von Vorteil ist dabei, dass die Geberfahnen in einfacher und kostengünstiger Weise in den Motor integrierbar sind oder durch Formgebung eines Teils, insbesondere eines sowieso schon vorhandenen Teils wie eines Lüfters oder dergleichen, die Geberfahnen herstellbar sind.

Bei einer vorteilhaften Ausgestaltung sind die mit dem Lüfter rotierbaren Geberfahnen und der Impulsgeber derart gestaltet, dass pro Umdrehung ein oder zwei Geberfahnen wirksam sind. Von Vorteil ist dabei, dass eine äußerst geringe Impulsrate in kostengünstiger und einfacher Weise herstellbar ist.

Bei einer vorteilhaften Ausgestaltung ist der Lüfter derart gestaltet, dass ein Massenausgleich eingebaut ist. Von Vorteil ist dabei, dass die Unwucht, die durch eine sich auf einem gewissen Radius befindende Geberfahne erzeugt würde, kompensiert wird.

Bei einer vorteilhaften Ausgestaltung ist die elektronischen Schaltung derart gestaltet, dass die Impulsrate derart reduziert oder herabgeteilt wird, dass die Impulsrate niedriger als die maximal mögliche Datenübertragungsrate des Bussystems ist. Von Vorteil ist dabei, dass eine elektronische Schaltung eine Reduzierung oder Herabteilung kostengünstig ausführbar macht.

Bei einer weiteren vorteilhaften Ausgestaltung ist die elektronischen Schaltung derart gestaltet, dass die Impulsrate derart reduziert oder herabgeteilt wird, dass die Impulsrate niedriger als die maximal mögliche Datenübertragungsrate des Bussystems ist, und die reduzierten oder herabgeteilten Signale des Impulsgebers in das Busprotokoll umsetzbar sind. Von Vorteil ist dabei, dass durch eine Umgestaltung oder Erweiterung der Funktionalität der elektronischen Schaltung die Reduzierung oder Herabteilung kostengünstig ausführbar ist.

Bei einer weiteren vorteilhaften Ausgestaltung ist die Anzahl der Geberfahnen derart gewählt oder wählbar, dass die Impulsrate niedriger als die maximal mögliche Datenübertragungsrate des Bussystems ist. Von Vorteil ist dabei, dass in einfacher und kostengünstiger Weise eine niedrige Impulsrate herstellbar ist.

Bei weiteren vorteilhaften Ausgestaltung detektiert der Impulsgeber optisch, magnetisch oder elektrisch leitende Geberfahnen. Von Vorteil ist dabei, dass industrieübliche kostengünstige Impulsgeber einsetzbar sind.

Weitere vorteilhafte Ausgestaltungen ergeben sich aus den Unteransprüchen.

### Bezugszeichenliste

- 1: Motor
- 2: Motoranschlusskasten
- 3: Lüfterhaube
- 4: Impulsgeber
- 5: Anschlussleitungen
- 6: Lüfterrad
- 31: SPS
- 51, 61: Geberfahnen
- 62: Massenausgleich
- 71: zentraler Feldbus
- 72: Busankopplungsmodul
- 73: SPS
- 81: Busknoten mit elektronischer Schaltung
- 82: Stichleitung

Die Erfindung wird nun anhand von einer Abbildung näher erläutert:

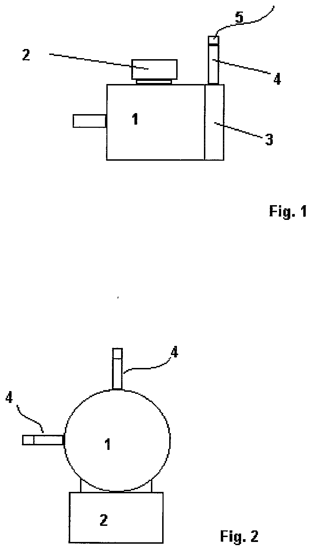

In der Figur 1 erfindungsgemäßen Ausführungsform gezeigt. Der Motor 1 trägt einen Motoranschlusskasten 2. Außerdem weist er einen B-seitig angebauten Lüfter mit Lüfterhaube 3 auf. Ein Impulsgeber 4 mit Anschlussleitungen 5 wird außenseitig an der Lüfterhaube 3 angebracht. In einem weiteren Ausführungsbeispiel wird der Impulsgeber 4 mit dem Motor 1 fest verbunden. Ein Verfahren zumindest zur Drehzahlerkennung ist bei den diesen Ausführungsformen anwendbar. Im Impulsgeber 4 befindet sich Auswerteelektronik, die einen Schwingkreis umfasst. Als Impulsgeber 4 sind verschiedene Systeme verwendbar, insbesondere Systeme, die Geberfahnen aufgrund ihrer optischen, magnetischen oder elektrischen Eigenschaften erkennen. Im Allgemeinen werden mit dem Impulsgeber die Entfernungen solcher Geberfahnen bestimmt. Wenn die Entfernung einen kritischen Wert unterschreitet, löst der Impulsgeber einen Impuls aus, insbesondere in Form eines elektrischen Signals. Die Anzahl der Impulse pro Zeiteinheit, insbesondere pro Sekunde, wird als Impulsrate bezeichnet.

Eine der bekannten Arten von Impulsgebern liefert einen ersten Spannungswert, wenn eine Geberfahne sich im empfindlichen Bereich des Impulsgebers 4 befindet, und sie liefert einen zweiten Spannungswert, wenn eine Geberfahne sich nicht im empfindlichen Bereich des Impulsgebers 4 befindet. Somit kann eine nachgeschaltete elektronische Schaltung den momentanen Zustand des Lüfters auswerten, natürlich nur im Rahmen der Messgenauigkeit der Vorrichtung.

In der Figur 2 ist eine Seitenansicht auf das erfindungsgemäße Ausführungsbeispiel skizziert, wobei in dem hier gezeigten Ausführungsbeispiel nicht ein sondern zwei Impulsgeber 4 anmontiert sind. Dabei ist daher ein Verfahren zur Drehrichtungserfassung anwendbar.

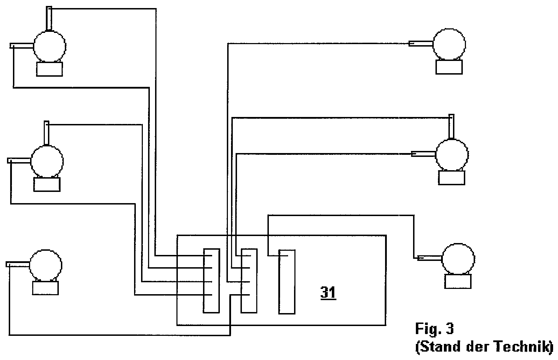

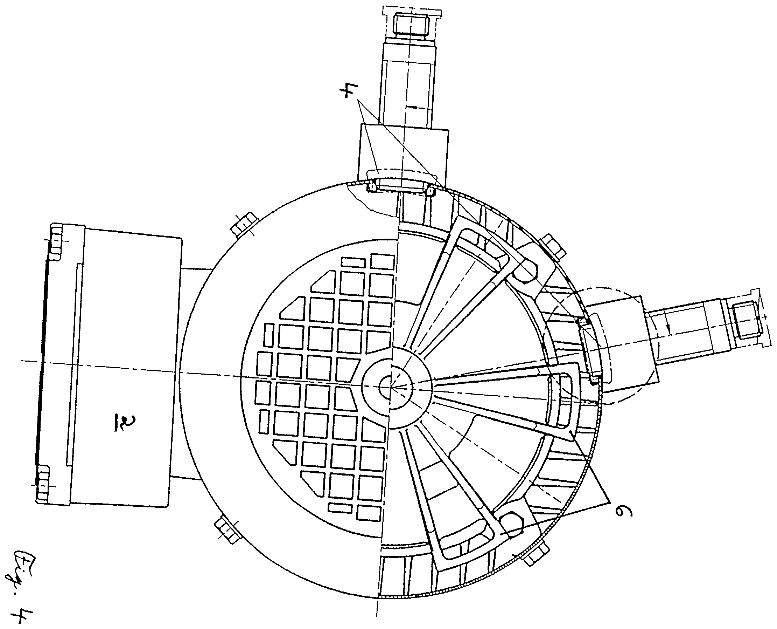

In der Figur 3 und auch in Figur 4 ist der Stand der Technik gezeigt. Motoren 1 mit ein oder zwei Impulsgebern 4 weisen ein Lüfterrad 6 mit Geberfahnen auf und übertragen elektrische Signale der Impulsgeber 4 an eine speicherprogrammierbare Steuerung, SPS 31. Jeweils vier Impulsgeber 4 werden mit einem Eingangsblock verbunden. Die SPS 31 weist mehrere Eingangsblöcke auf und wertet die Impulse bzw. elektrischen Signale aus. In weiteren Ausführungsbeispielen weist die SPS Eingangsblöcke oder Eingangskarten mit 16 oder mehr Anschlussmöglichkeiten für Impulsgeber 4 auf. Dem Gedanken der Dezentralisierung folgend sollen kostengünstige kleine SPS 31 zunehmend verwendet werden. Jedoch wird dies dadurch erschwert, dass die Auswertung hoher Impulsraten nur unter Einsatz kostspieliger leistungsfähiger SPS ausführbar ist.

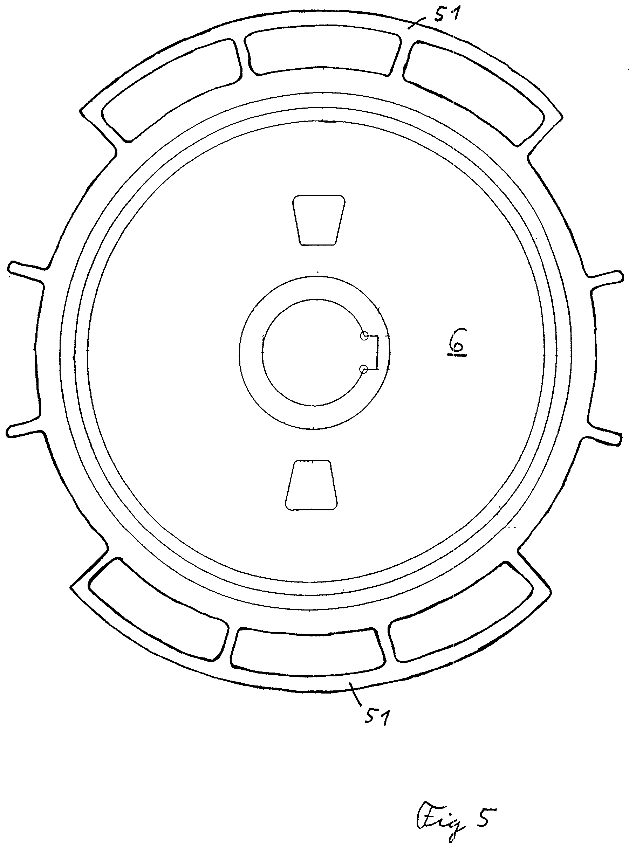

In der Figur 5 ist ein Lüfterrad 6 eines erfindungsgemäßen Ausführungsbeispiels mit zwei symmetrisch angeordneten Geberfahnen 51 gezeigt. Pro Umdrehung des Lüfters oder Lüfterrades 6 werden zumindest 2 Impulse je nach Art des Impulsgebers generiert.

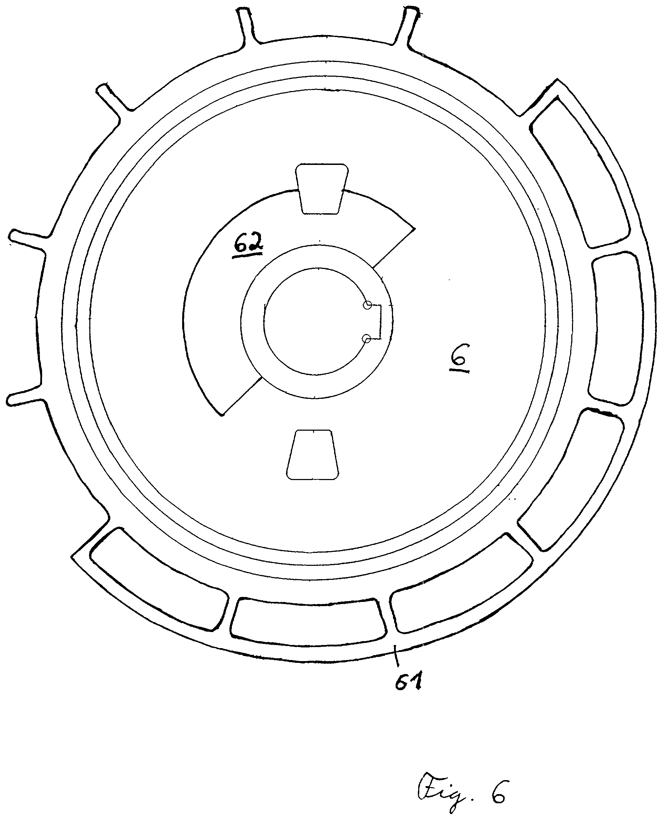

In der Figur 6 ist ein Lüfterrad 6 eines erfindungsgemäßen Ausführungsbeispiels mit nur einer Geberfahne 61 gezeigt. Der Massenausgleich 62 kompensiert im Wesentlichen die Unwucht. In einem weiteren in der Figur nicht gezeigten, weiteren erfindungsgemäßen Ausführungsbeispiel werden durch Anbringen mehrerer Massenausgleiche auch höhere Momente des Trägheitstensors des Lüfterrads kompensiert.

Bei weiteren Ausführungsbeispielen erstreckt sich die Geberfahne nicht wie in Figur 6 über im Wesentlichen 180° am Umfang, sondern erstreckt sich über einen anderen, beispielsweise geringeren Winkel. Bei einer maximalen Umdrehungszahl im Normalbetrieb von 3000 Umdrehungen pro Minute, also einer Umlaufperiode von 20ms, muss sie sich aber über mehr als 90° am Umfang erstrecken, da sonst ein kritischer Wert der Datenübertragung überschreitbar ist.

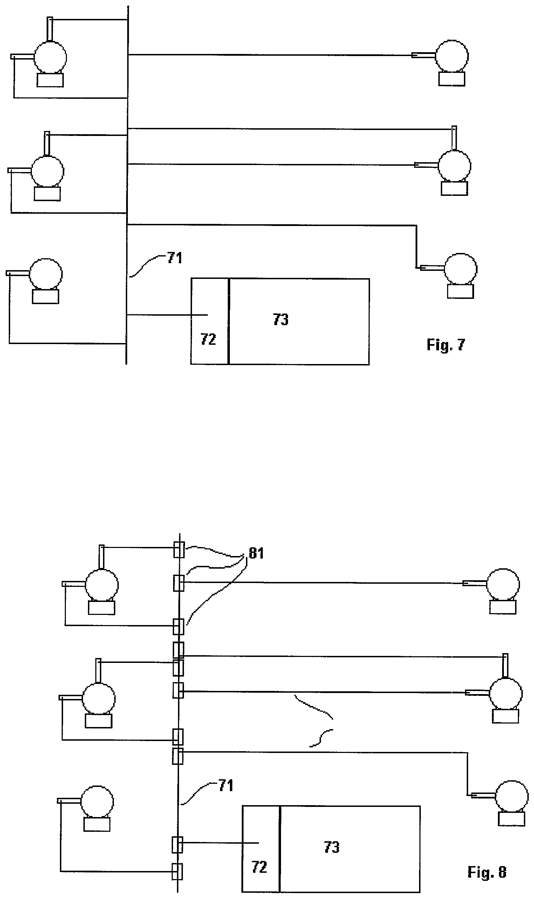

In der Figur 7 ist ein erfindungsgemäßes Ausführungsbeispiel gezeigt. Die Impulsgeber 4 der erfindungsgemäßen Motoren 1 sind an einen zentralen Feldbus 71 angeschlossen, der an mindestens ein Busankopplungsmodul 72 einer SPS 73 angeschlossen ist. In dem gezeigten erfindungsgemäßen Ausführungsbeispiel werden die Impulsgeber an einen zentralen Feldbus 71 angeschlossen, der mit dem Busankopplungsmodul 72 verbunden ist. Im Vergleich zum Stand der Technik aus Figur 3 bezüglich der Verkabelungslänge sind geringere Kabellängen notwendig.

Solche Verkabelungs-Topologien führen jedoch alle Signale der Impulsgeber bzw. die ins entsprechende Busprotokoll gewandelte Daten im zentralen Feldbus 71, wodurch also im Stand der Technik bei Einsatz von Motoren mit Impulsgebern aus dem Stand der Technik eine hohe kostspielige Übertragungsrate realisiert werden muss. Die Erfindung, insbesondere ein beschriebenes erfindungsgemäßes Ausführungsbeispiel, hingegen ermöglicht den Einsatz kostengünstigerer Systeme, insbesondere dezentrale SPS, die eine geringere Datenübertragungsrate aufweisen.

In einem weiteren erfindungsgemäßen Ausführungsbeispiel wird die Verbindung der Impulsgeber 4 mit einem zentralen Feldbus 71 über einen Busknoten 81 mit elektronischer Schaltung realisiert.

In einem weiteren erfindungsgemäßen Ausführungsbeispiel weist der Busknoten 81 eine elektronische Schaltung auf, die die Signale des jeweiligen Impulsgebers 4 in dem Busprotokoll entsprechende Daten umsetzt.

In einem weiteren erfindungsgemäßen Ausführungsbeispiel ist die elektronische Schaltung des Busknotens 81 derart gestaltet, dass die Impulse oder Signale des Impulsgebers 4 herabgeteilt oder reduziert werden. Dies erfolgt in einem Ausführungsbeispiel mittels Hardware, in einem anderen mittels Software und in einem weiteren mittels einer kombinierten Lösung mittels Hard- und Software.

Bei allen erfindungsgemäßen Ausführungsbeispielen sind die elektronischen Schaltungen und Busknoten derart gestaltet, dass die Datenübertragungsrate im Normalbetrieb nie einen kritischen Wert überschreitet.

## Patentansprüche

1. Verfahren zur Drehzahl- und/oder Drehrichtungserfassung von mindestens einem Motor (1), insbesondere einem Asynchronmotor, der durch seine Motorwelle ein Lüfterrad (6), welches mit einer Lüfterhaube (3) umgeben ist, antreibt, wobei zumindest ein Impulsgeber (4) am Motor (1) oder an der Lüfterhaube (3) angebracht ist,
und wobei mit dem Lüfterrad (6) rotierbare Geberfahnen (51, 61) derart angeordnet sind, dass sie mit dem Impulsgeber (4) zusammenwirken,
**dadurch gekennzeichnet, dass** Impulse, insbesondere elektrische Signale, des Impulsgebers (4) durch eine als Busteilnehmer verbundene elektronische Schaltung verarbeitet werden und in ein Busprotokoll umgesetzt werden und die so erhaltene Information, oder die so erhaltenen Daten mittels eines Bussystems (71) an mindestens einen weiteren Busteilnehmer, (73), insbesondere einen Zentralrechner oder eine SPS (speicherprogrammierbare Steuerung), elektrisch und/oder optisch übertragen werden,
wobei der weitere Busteilnehmer (73) aus der Impulsrate die Drehzahl und/oder die Drehrichtung bestimmt,
und dass die Impulsrate mittels elektronischer Hardware, Software oder mechanisch reduziert oder herabgeteilt wird, sodass sie derart niedrig ist, dass die maximal mögliche Datenübertragungsrate des Bussystems (71) nach Umsetzung in das Busprotokoll nicht überschritten wird.

2. Verfahren zur Drehzahl- und/oder Drehrichtungserfassung von mindestens einem Motor (1) nach Anspruch 1
**dadurch gekennzeichnet, dass**
die Anzahl der Geberfahnen (51, 61) bei der Fertigung oder während des Betriebs derart gewählt
oder wählbar ist, dass die Impulsrate niedriger als die maximal mögliche Datenübertragungsrate des Bussystems ist.

3. Verfahren zur Drehzahl- und/oder Drehrichtungserfassung von mindestens einem Motor (1) nach mindestens einem der vorangegangenen Ansprüche,
**dadurch gekennzeichnet, dass**
die Impulsrate im Normalbetrieb des Motors (1) niedriger als die maximal mögliche
Datenübertragungsrate des Bussystems ist, wobei im Normalbetrieb die Drehzahl des Motors einen Wert im Bereich von Null Umdrehungen pro Sekunde bis zu einem Drehzahl-Grenzwert, insbesondere beispielsweise einem Mehrfachen der Nenndrehzahl, aufweist.

4. Verfahren zur Drehzahl- und/oder Drehrichtungserfassung von mindestens einem Motor (1) nach mindestens
einem der vorangegangenen Ansprüche,
**dadurch gekennzeichnet, dass**
als Bussystem ein ASI-Bus oder ein Feldbus, wie Interbus, Profibus, CAN oder dergleichen, verwendbar ist.

5. Verfahren zur Drehzahl- und/oder Drehrichtungserfassung von mindestens einem Motor (1) nach mindestens
einem der vorangegangenen Ansprüche,
**dadurch gekennzeichnet, dass**
pro Umdrehung des Lüfterrads (6) nur eine Geberfahne (61) oder zwei Geberfahnen (51) am Impulsgeber (4) vorbeirotieren und zusammenwirken.

6. System, umfassend mindestens einen Motor (1), insbesondere einen Asynchronmotor, der durch seine Motorwelle ein Lüfterrad (6), welches mit einer Lüfterhaube (3) umgeben ist, antreibt, ein Bussystem (71) und eine Vorrichtung zur Drehzahl- und/oder Drehrichtungserfassung von mindestens einem Motor (1), wobei zumindest ein Impulsgeber (4) am Motor (1) oder an der Lüfterhaube (3) angebracht ist,
und wobei mit dem Lüfterrad (6) rotierbare Geberfahnen (51, 61) derart angeordnet sind, dass sie mit dem Impulsgeber (4) zusammenwirken,
**dadurch gekennzeichnet, dass** der mindestens eine Impulsgeber (4) elektrisch mit einer elektronischen Schaltung verbunden ist
und diese elektronische Schaltung Impulse, insbesondere elektrische Signale,
in ein Busprotokoll umsetzt und mit einem Bussystem, (71) insbesondere Feldbus, ASI oder
dergleichen, elektrisch und/oder optisch als Busteilnehmer verbunden ist, wobei das Bussystem mindestens einen weiteren Busteilnehmer, (73) insbesondere einen Zentralrechner
oder eine SPS (speicherprogrammierbare Steuerung), umfasst, und dass, der weitere Busteilnehmer (73) derart ausgebildet ist, dass aus der Impulsrate die Drehzahl und/oder die Drehrichtung bestimmt wird, und dass der das Lüfterrad (6), die Geberfahnen (51, 61) und die elektronische Schaltung derart ausgebildet sind, dass die Impulsrate mittels elektronischer Hardware, Software oder mechanisch reduziert oder herabgeteilt wird, sodass sie derart niedrig ist, dass die maximal mögliche Datenübertragungsrate des Bussystems nach Umsetzung in das Busprotokoll nicht überschritten wird.

7. System nach Anspruch 6, **dadurch gekennzeichnet, dass** der Impulsgeber (4) zumindest einen Schwingkreis umfasst und/oder aufweist,
und/oder dass eine mit dem Lüfterrad (6) rotierbare Scheibe oder Komponente und/oder das Lüfterrad (6) selbst die Geberfahnen (51,61) aufweist.

8. System nach mindestens einem der vorangegangenen Ansprüche, **dadurch gekennzeichnet, dass**
die mit dem Lüfterrad (6) rotierbaren Geberfahnen (51, 61) und der Impulsgeber (4) derart gestaltet sind, dass pro Umdrehung ein oder zwei Geberfahnen (51, 61) wirksam sind, und/oder dass das Lüfterrad (6) derart gestaltet ist, dass ein Massenausgleich (62) eingebaut ist.

9. System nach mindestens einem der vorangegangenen Ansprüche, **dadurch gekennzeichnet, dass**
der Impulsgeber (4) elektrisch, magnetisch und/oder optisch leitende Geberfahnen (51, 61) detektiert.

10. System nach mindestens einem der vorangegangenen Ansprüche,
**dadurch gekennzeichnet, dass**
sich mindestens eine Geberfahne (51, 61) über einen Winkel von mehr als 90° am Umfang des
Lüfters erstreckt, insbesondere zur Vermeidung der Überschreitung eines kritischen Wertes der Datenübertragung an das Bussystem.

## Claims

1. Method for detecting the rotational speed and/or rotational direction of at least one motor (1), in particular an asynchronous motor, which by its motor shaft drives a fan wheel (6) which is surrounded by a fan cowl (3),
wherein at least one pulse generator (4) is attached to the motor (1) or to the fan cowl (3),
and wherein encoder vanes (51, 61) rotatable with the fan wheel (6) are arranged in such a way that they cooperate with the pulse generator (4),
**characterised in that**
pulses, in particular electrical signals, of the pulse generator (4) are processed by an electronic circuit connected as bus station and are converted into a bus protocol and the information thus obtained, or the data thus obtained, is electrically and/or optically transmitted by means of a bus system (71) to at least one further bus station (73), in particular a central computer or an SPS (stored-program controller),
wherein the further bus station (73) determines the rotational speed and/or the rotational direction from the pulse rate,
and **in that** the pulse rate is reduced or divided down by means of electronic hardware, software or mechanically, such that it is so low that the maximum possible data transmission rate of the bus system (71) is not exceeded after conversion into the bus protocol.

2. Method for detecting the rotational speed and/or rotational direction of at least one motor (1) according to claim 1,
**characterised in that**
the number of encoder vanes (51, 61) is selected or selectable in the course of production or during operation in such a way that the pulse rate is lower than the maximum possible data transmission rate of the bus system.

3. Method for detecting the rotational speed and/or rotational direction of at least one motor (1) according to at least one of the preceding claims,
**characterised in that**
the pulse rate in normal operation of the motor (1) is lower than the maximum possible data transmission rate of the bus system, the rotational speed of the motor in normal operation having a value in the range from zero revolutions per second up to a rotational speed limit value, in particular for example a multiple of the nominal rotational speed.

4. Method for detecting the rotational speed and/or rotational direction of at least one motor (1) according to at least one of the preceding claims,
**characterised in that**
an ASI-Bus or a Fieldbus, such as Interbus, Profibus, CAN or the like, is usable as bus system.

5. Method for detecting the rotational speed and/or rotational direction of at least one motor (1) according to at least one of the preceding claims,
**characterised in that**
per revolution of the fan wheel (6), only one encoder vane (61) or two encoder vanes (51) rotate past and cooperate with the pulse generator (4).

6. System, comprising at least one motor (1), in particular an asynchronous motor, which by its motor shaft drives a fan wheel (6) which is surrounded by a fan cowl (3), a bus system (71) and a device for detecting the rotational speed and/or rotational direction of at least one motor (1),
wherein at least one pulse generator (4) is attached to the motor (1) or to the fan cowl (3),
and wherein encoder vanes (51, 61) rotatable with the fan wheel (6) are arranged in such a way that they cooperate with the pulse generator (4),
**characterised in that**
the at least one pulse generator (4) is electrically connected to an electronic circuit and this electronic circuit converts pulses, in particular electrical signals, into a bus protocol and is connected to a bus system (71), in particular Fieldbus, ASI or the like, electrically and/or optically as a bus station, wherein the bus system comprises at least one further bus station (73), in particular a central computer or an SPS (stored-program controller),
and **in that** the further bus station (73) is configured in such a way that the rotational speed and/or the rotational direction is determined from the pulse rate, and **in that** the fan wheel (6), the encoder vanes (51, 61) and the electronic circuit are configured in such a way that the pulse rate is reduced or divided down by means of electronic hardware, software or mechanically, such that it is so low that the maximum possible data transmission rate of the bus system is not exceeded after conversion into the bus protocol.

7. System according to claim 6,
**characterised in that**
the pulse generator (4) comprises and/or has at least one oscillating circuit,
and/or **in that** a disc or component rotatable with the fan wheel (6) and/or the fan wheel (6) itself has the encoder vanes (51, 61).

8. System according to at least one of the preceding claims,
**characterised in that**
the encoder vanes (51, 61), rotatable with the fan wheel (6), and the pulse generator (4) are designed in such a way that per revolution one or two encoder vanes (51, 61) are effective, and/or **in that** the fan wheel (6) is designed in such a way that a mass balance (62) is incorporated.

9. System according to at least one of the preceding claims,
**characterised in that**
the pulse generator (4) detects electrically, magnetically and/or optically conducting encoder vanes (51, 61).

10. System according to at least one of the preceding claims,
**characterised in that**
at least one encoder vane (51, 61) extends over an angle of more than 90° at the circumference of the fan, in particular to avoid exceeding a critical value of the data transmission to the bus system.

## Revendications

1. Procédé de détection de la vitesse et/ou du sens de rotation d'au moins un moteur (1), en particulier d'un moteur asynchrone qui entraîne par son arbre de moteur une roue de ventilateur (6) qui est entourée par un capot de ventilateur (3), sachant qu'au moins un générateur d'impulsions (4) est installé sur le moteur (1) ou sur le capot de ventilateur (3),
et sachant que des palettes d'émission (51, 61), rotatives avec la roue de ventilateur (6), sont disposées de telle sorte qu'elles coopèrent avec le générateur d'impulsions (4), **caractérisé en ce que** des impulsions, en particulier des signaux électriques, du générateur d'impulsions (4) sont traités par un montage électronique relié en tant que participant au bus et sont convertis en un protocole de bus,
et les informations ainsi obtenues ou les données ainsi obtenues sont transmises électriquement et/ou optiquement au moyen d'un système de bus (71) à au moins un autre participant au bus (73), en particulier à un ordinateur central ou à un automate programmable industriel (API),
sachant que l'autre participant au bus (73) détermine à partir du taux d'impulsions la vitesse de rotation et/ou le sens de rotation,
et **en ce que** le taux d'impulsions est réduit ou divisé au moyen d'un matériel ou d'un logiciel électronique ou mécaniquement, de sorte qu'il est tellement faible que le taux maximal possible de transmission de données du système de bus (71) n'est pas dépassé à la suite de la conversion pour former le protocole de bus.

2. Procédé de détection de la vitesse et/ou du sens de rotation d'au moins un moteur (1) selon la revendication 1, **caractérisé en ce que** le nombre de palettes d'émission (51, 61) est ou peut être, lors de la fabrication ou pendant le fonctionnement, choisi de façon que le taux d'impulsions soit inférieur au taux maximal possible de transmission de données du système de bus.

3. Procédé de détection de la vitesse et/ou du sens de rotation d'au moins un moteur (1) selon au moins une des revendications précédentes, **caractérisé en ce que** le taux d'impulsions est inférieur au taux maximal possible de transmission de données du système de bus pendant le fonctionnement normal du moteur (1), sachant que, pendant le fonctionnement normal, la vitesse de rotation du moteur présente une valeur située dans la plage allant de zéro révolution par seconde jusqu'à une valeur limite de vitesse de rotation, en particulier par exemple un multiple de la vitesse de rotation nominale.

4. Procédé de détection de la vitesse et/ou du sens de rotation d'au moins un moteur (1) selon au moins une des revendications précédentes, **caractérisé en ce qu'**on peut utiliser comme système de bus un bus ASI ou un bus de champ, tel que Interbus, Profibus, CAN ou analogues.

5. Procédé de détection de la vitesse et/ou du sens de rotation d'au moins un moteur (1) selon au moins une des revendications précédentes, **caractérisé en ce que**, pendant chaque révolution de la roue de ventilateur (6), seulement une palette d'émission (61) ou deux palettes d'émission (51) passent devant le générateur d'impulsions (4) et coopèrent avec lui.

6. Système, comprenant au moins un moteur (1), en particulier un moteur asynchrone qui entraîne par son arbre de moteur une roue de ventilateur (6) qui est entourée par un capot de ventilateur (3), un système de bus (71) et un dispositif de détection de la vitesse et/ou du sens de rotation d'au moins un moteur (1),
sachant qu'au moins un générateur d'impulsions (4) est installé sur le moteur (1) ou sur le capot de ventilateur (3),
et sachant que des palettes d'émission (51, 61), rotatives avec la roue de ventilateur (6), sont disposées de telle sorte qu'elles coopèrent avec le générateur d'impulsions (4), **caractérisé en ce que** le générateur d'impulsions au moins unique (4) est relié électriquement à un montage électronique,
et ce montage électronique convertit des impulsions, en particulier des signaux électriques, en un protocole de bus, et est relié électriquement et/ou optiquement en tant que participant au bus à un système de bus (71), en particulier à un bus de champ, un bus ASI ou analogues, sachant que le système de bus comprend au moins un autre participant au bus (73), en particulier un ordinateur central ou un automate programmable industriel (API),
et **en ce que** l'autre participant au bus (73) est conçu de telle sorte que la vitesse de rotation et/ou le sens de rotation est déterminé(e) partir du taux d'impulsions,
et **en ce que** la roue de ventilateur (6), les palettes d'émission (51, 61) et le montage électronique sont conçus de telle sorte que le taux d'impulsions est réduit ou divisé au moyen d'un matériel ou d'un logiciel électronique ou mécaniquement, de sorte qu'il est tellement faible que le taux maximal possible de transmission de données du système de bus n'est pas dépassé à la suite de la conversion pour former le protocole de bus.

7. Système selon la revendication 6, **caractérisé en ce que** le générateur d'impulsions (4) comprend et/ou présente au moins un circuit oscillant,
et/ou **en ce qu'**un disque ou un composant rotatif avec la roue de ventilateur (6), et/ou la roue de ventilateur (6) elle-même, présente les palettes d'émission (51, 61).

8. Système selon au moins une des revendications précédentes, **caractérisé en ce que** les palettes d'émission (51, 61) rotatives avec la roue de ventilateur (6) et le générateur d'impulsions (4) sont conçus de telle sorte qu'une ou deux palettes d'émission (51, 61) sont actives pendant chaque révolution,
et/ou **en ce que** la roue de ventilateur (6) est conçue de telle sorte qu'une masse d'équilibrage (62) y est incorporée.

9. Système selon au moins une des revendications précédentes, **caractérisé en ce que** le générateur d'impulsions (4) détecte des palettes d'émission (51, 61) électriquement, magnétiquement et/ou optiquement conductrices.

10. Système selon au moins une des revendications précédentes, **caractérisé en ce qu'**au moins une palette d'émission (51, 61) s'étend sur un angle supérieur à 90° sur la périphérie du ventilateur, en particulier afin d'éviter le dépassement d'une valeur critique de la transmission de données au système de bus.
